# EUROPEAN PATENT APPLICATION

(11) **EP 0 926 841 A2**
(43) Date of publication of application: **30.06.1999**
(21) Application number: 98309871.6
(22) Date of filing: 02.12.1998
(51) Int. Cl.: H04B 3/46

(54) **Method of and apparatus for testing a telecommunications link**

(30) Priority: 20.12.1997 GB 9726902; 05.06.1998 GB 9811984
(71) Applicant: NORTHERN TELECOM LIMITED, Montreal, Quebec H2Y 3Y4 (CA)
(72) Inventor: Dyer, Michael Philip, Stansted, Essex CM24 8HG (GB); Dyke, Peter John, Saffron Walden, Essex CB11 3SP (GB); Williamson, Roger James, Much Hadham, Hertfordshire SG10 6AL (GB); Grant, Mike Francis, Bishop Stortford, Hertfordshire SG10 6AL (GB)
(74) Representative: Lawrence, Malcolm Graham

(57) **Abstract**

A method of testing a telecommunications link between a subscriber unit (20) and an exchange (30) is disclosed. The method includes the steps of causing (6) a subscriber unit (20) to emit (70-72) a predetermined signal, which is then transmitted along the link (26) to the exchange (30). The received signal (8) is analysed (12) and a determination is made (10) regarding the quality of the telecommunications link (26) based on the received signal. More specifically, an assessment of an operational quality of the telecommunications link at relatively high broadband frequencies is based on the signal received at the exchange (30) when the predetermined test signal is one of a DTMF test signal transmitted within a relatively low audio frequency range and an accurately generated signal generated from a dongle (60) placed in-line between the subscriber unit (20) and the telecommunications link (26). In relation to the accurately generated signal generated from the dongle (60), it is preferable that the test signal has frequencies relatively close to and most preferably within a frequency band of a proposed broadband service.

## Description

This invention relates, in general, to a method of and apparatus for testing a telecommunications link and is particularly, but not exclusively, applicable to a method of and apparatus for testing a copper pair connecting a telephone exchange to a subscriber unit and especially for forming an assessment of the operational capabilities of the copper pair to support relatively high frequency broadband services.

The connection between individual telephone subscribers, be they domestic or business subscribers, and a local telephone exchange has traditionally been provided using copper cables consisting of a number of twisted-pair wires known as copper pairs. When these copper pairs were first deployed in local areas it was assumed that they would be used for transmission of voice signals only. These connections were expected to operate in a frequency range less than 4 kHz. Therefore, the planning rules which were adopted were based on easily controlled and measured parameters such as loop resistance and low frequency attenuation. In the UK the normal planning limits are 1000 Ohms loop resistance and 10 dB attenuation at 1 kHz.

These limits are achieved by a suitable choice of conductor gauge or diameter depending on the route distance between the exchange and the customer. Longer routes clearly require larger conductors in order to meet the resistance and attenuation limits. Conductors tend to be between 0.3 mm and 0.9 mm in diameter, with increasingly larger diameter conductors being used the further the cable extends from the exchange. This allows for bundles of narrow gauge pairs to be grouped together at an exchange thus minimising cable handling problems.

Furthermore, at high frequencies, signal transmission in cable is principally through the so-called "skin effect" while loss (i.e. signal attenuation) is also skin effect dependent. Specifically, loss is proportionally greater in smaller gauge cables.

As the number of new subscribers obtaining telephone services from operators utilising optical feeders increases, telephony providers, whose systems are largely constructed of copper pairs, are increasingly looking to the provision of similar wideband and broadband services to their customers over their copper pair links. With the advent of wideband and broadband services such as internet access, video on demand and digital data transmissions as well as increases in the volume of telephony services telephony providers require to test their individual links between exchanges and subscribers in order to ascertain whether or not each link will support the provision of such services. In particular, lines must be tested to see if they will support present ISDN services and as time passes will more frequently need to be tested to ascertain whether or not they will support services requiring technologies such as asynchronous digital subscriber line signalling (ADSL), high speed digital subscriber line signalling (HDSL) and very high speed digital subscriber line signalling (VDSL). These transmission techniques are generically termed xDSL transmission are are used over the copper pairs.

One of the key basic parameters for establishing the suitability of a particular copper pair for carrying such services is its transmission length, as signal attenuation increases with transmission length. Unfortunately, this is not readily deducible from the records of a particular operator, even if they are accurate. This is because, although the records show duct routes and section lengths, they do not necessarily indicate how a cable is routed through the duct. For example, it is often found that a copper pair in a specific cable will transverse the full length of the duct to a splice point and then return along the same duct as a pair in another, possibly smaller cable.

It is equally misleading to use measurements based on grid references in order to predict lengths, because the necessary scaling factor of actual cable length to direct distance is unknown in any specific instance. For example, in the UK, the average scaling factor is probably somewhere between 1.4 and 1.8. The resulting distances are often enough to render a link unsuitable for the provision of wideband or broadband services and the uncertainty in ascertaining actual cable route lengths makes this method highly inaccurate. In addition, the connectors may include sections of aluminium, which will have different transmission characteristics to the copper sections. Aluminium was used in this way when copper prices made copper less economic than aluminium.

One alternative approach is for operators to dispatch staff to a customer's premises to undertake one or a series of measurements of the copper cable and its performance. This is a time consuming and consequently expensive solution, especially if the customer decides not to take the service, or takes it only for a short period. A variation on this method is for the operator to take sample measurements of cable lengths and performances from the exchange to the local telephone cabinet, from where individual copper pairs are directed to individual subscribers. As the cables from the exchange to the cabinet are shared this would reduce the cost per customer line, but would only give an indication of a few of the copper pairs from the exchange. Equally this gives no indication of the length and performance of the copper drops from the cabinet into customer's premises. Therefore this method is again rather inaccurate.

Time domain reflectometry (TDR) is a technique primarily used for determining a discontinuity or breakage in a cable. However, this may be usable to test a link from an exchange to a subscriber unit. Unfortunately, this method is not conducive to copper pairs, as there can be many reflections from imperfections, spliced joints, etc., which may mask the ultimate reflection, if any, from the end of the cable. Also, although most telephones are quite well matched to the line, they may not produce a reflection at the point where it may be most useful. Equally, the number of telephones connected at a customer's premises, and hence the differing impedances produced, could cause spurious results. The main difficulty is that TDR measurements require a fast pulse to operate accurately. This is not possible with copper cables beyond a few hundred metres in length. Therefore, again this method is not appropriate.

US-A-3 912 884 describes a real-time monitoring system for assessing directionality of information flow. A gated circuit configuration restricts, at any time, the flow of information through the monitoring device to a single direction.

US-A-4 302 843 relates to a measuring system for assessing characteristics of a transmission path. The system synthesises and then inserts special test pulses into gaps in normal traffic transmissions, and requires access to both ends of the transmission path under test.

US-A-4 639 557 describes a system for controlling the testing of lines from a remote location other than a host exchange. Specifically, a tester, located at the host exchange, is controlled by dual tone multiple frequency (DTMF) signals sent from the remote location using a standard telephone handset. The system therefore provides remote control of a test desk located at the exchange, with results obtained from test signals emanating from the test desk conveyed back to the telephone using synthesised voice.

According to a first aspect of the present invention there is provided a method of testing a telecommunications link between an exchange and a subscriber unit, comprising the steps of: causing the subscriber unit to emit a predetermined test signal which is transmitted along the telecommunications link to the exchange; analysing the test signal received at the exchange; and characterised in that the method comprises the step of: assessing an operational quality of the telecommunications link at relatively high broadband frequencies based on the signal received at the exchange when using as the predetermined test signal one of: i) a DTMF test signal transmitted within a relatively low audio frequency range; and ii) an accurately generated signal generated from a dongle placed in-line between the subscriber unit and the telecommunications link.

In another aspect of the present invention there is provided a wireline test system comprising: a subscriber terminal having means arranged to initiate the generation of a test signal having predetermined characteristics; and a test centre remotely coupled to the subscriber terminal through a wireline communication resource that modifies the predetermined characteristics of the test signal, the test centre having determination means coupled to receive the test signal and characterised by: means arranged to assess an operational quality of the wireline communication resource at relatively high broadband frequencies based on the characteristics of the test signal received at the test centre and wherein the test signal is one of: i) a DTMF test signal transmitted within a relatively low audio frequency range; and ii) an accurately generated signal generated from a dongle placed in-line between the subscriber terminal and the wireline communication resource.

Preferably, the predetermined characteristic includes a power level that has a power fluctuation within a range of ±0.2dB.

In a preferred embodiment, the in-line dongle generates test signals at frequencies relatively close to and preferably within a frequency band of a proposed broadband service.

The preferred embodiments of the present invention advantageously provide an inexpensive and accurate method and apparatus for testing a telecommunications link between an exchange and a subscriber, which method is especially applicable in relation to an operator being able to assess the suitability of the telecommunication link for high frequency, broadband-type systems.

Beneficially, the method of testing telecommunications link according to the preferred embodiment of the present invention does not require an engineer to visit a subscriber. Indeed, the method of testing the link can be instigated from a subscriber's telephone enquiry and, as such, can be carried out as part of a single telephone call.

Embodiments of the present invention will now be described, by way of example, with reference to the accompanying drawings in which:
FIG. 1 is a flow chart indicating a method of testing in accordance with the present invention that is instigated due to a subscriber enquiry;
FIG. 2 is a schematic diagram of a telephone system capable of employing the method illustrated in Figure 1;
FIG. 3 illustrates a dual-tone signal generated by a DTMF telephone;

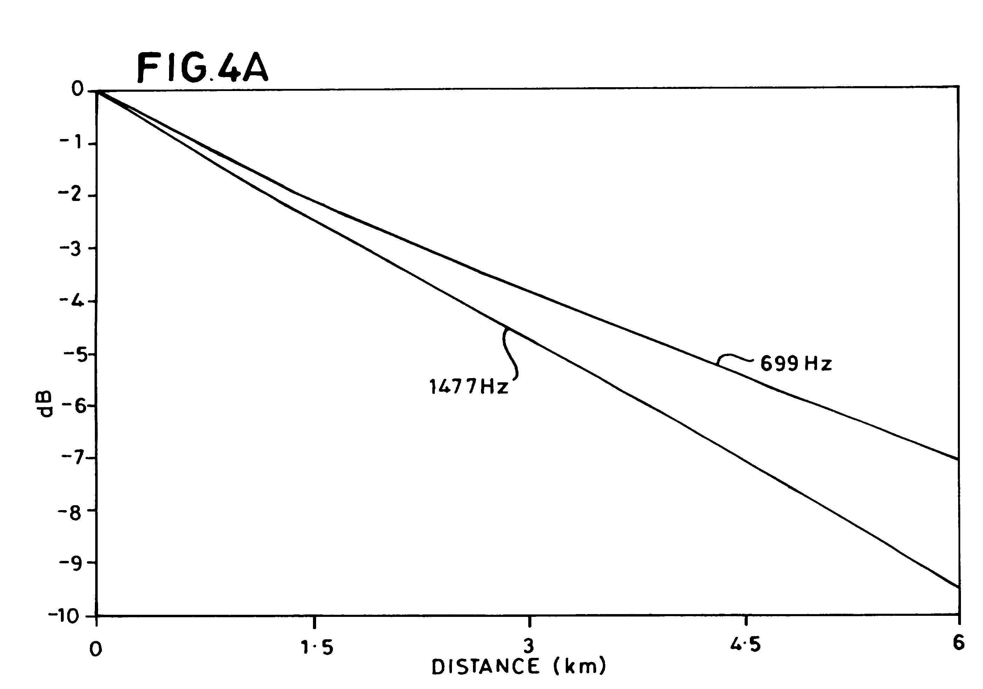

FIG. 4a illustrates the attenuation of a typical customer line with distance from an exchange;

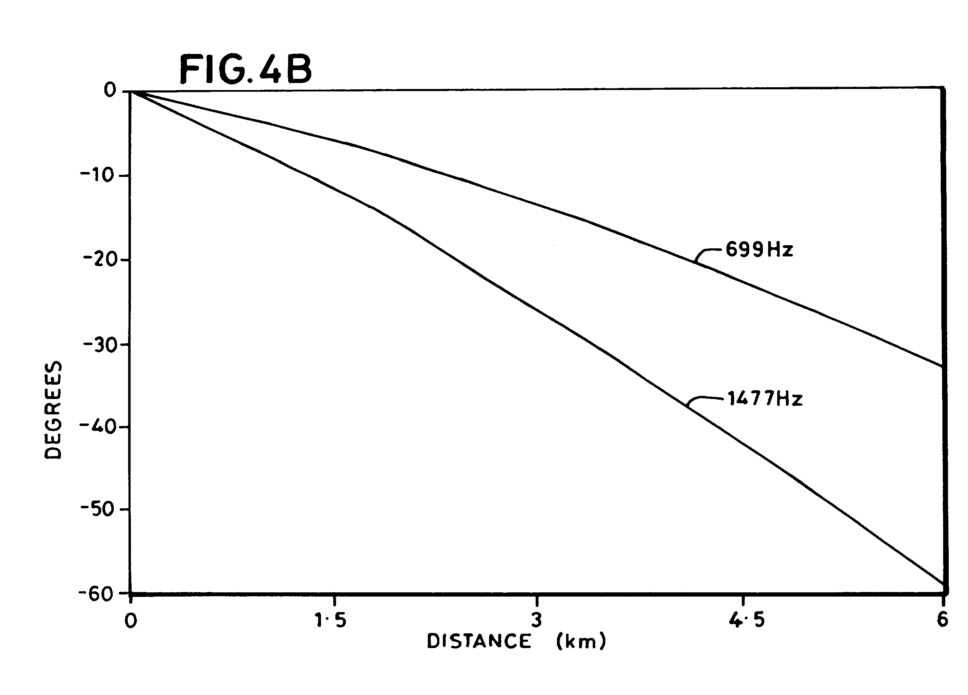

FIG. 4b illustrates the phase shift of a typical customer line with distance from an exchange;
FIG. 5 shows a graph of attenuation over length as a function of frequency;
FIG. 6 shows an in-line dongle of a preferred embodiment of the present invention;
FIG. 7 shows further steps that may be implemented within the flow chart of FIG. 1 to support the dongle embodiment of FIG. 6.

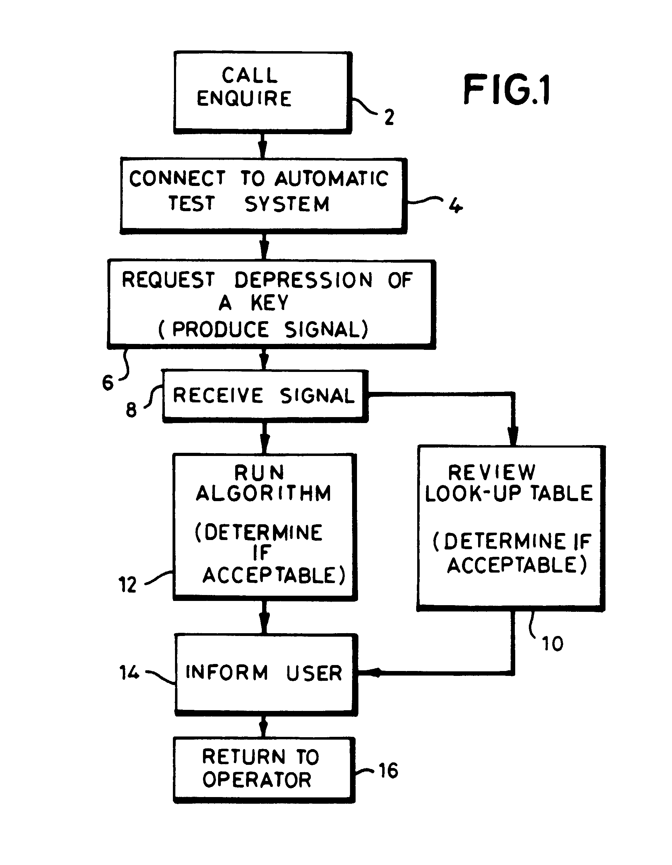

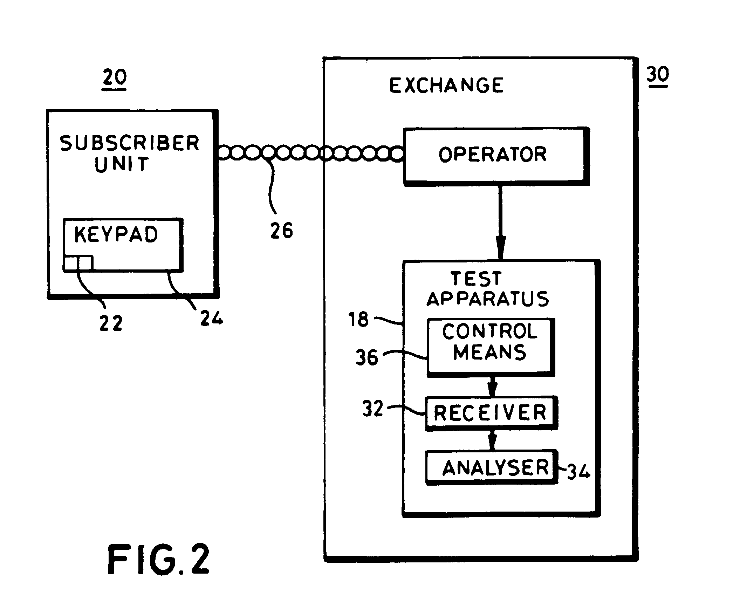

FIG. 1 illustrates a method of testing a telecommunications link between a subscriber unit 20 and an exchange 30 (Figure 2). In FIG. 1, the method is actuated due to a call from a subscriber as detailed in box 2 of the flow chart. The operator then connects the call to an automatic test system as indicated in box 4 of the flow chart.

The method comprises the step of causing the subscriber unit 20 (FIG. 2) to emit a predetermined signal. In this embodiment the signal is produced by the subscriber depressing a key 22 on a keypad 24 on the subscriber unit 20. This step is indicated at box 6 on the flow chart.

The signal thus produced is transmitted along the link 26, in the form of a copper pair, between the subscriber unit and the exchange 30. The predetermined test signal emitted by the subscriber unit 20 is thus connected to a receiver 32 within the test apparatus 18 from where it is transmitted to an analyser 34 for analysis such that a determination regarding the quality of the telecommunications link can be made based on the received signal. The entire process is controlled by a control means 36.

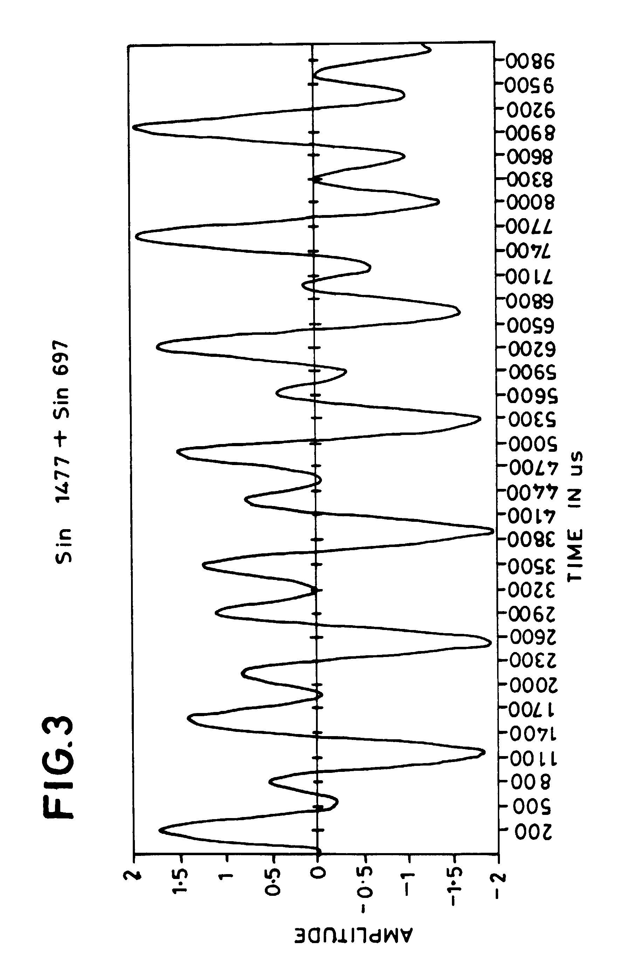

The signal is produced by a dual tone multi-frequency (DTMF) telephone in which each of the keys produces a signal which is well specified for example in the UK in terms of frequency and relative amplitude. The frequency of each tone within the dual tone produced by each key is, preferably, controlled to an absolute accuracy, with a difference between high and low tones usually stipulated as being within 2dB. However, the levels for the tones may vary, e.g. within a range of 4dB for loop currents between 25 milliamps (mA) and 40mA, while in higher loop currents the levels may vary monotonically to 14dB at 125mA. Each DTMF subscriber unit 20 provides sixteen tones per combination, defined using numbers 0 to 9, *, # and letters A to D. These range from the lowest at 697 hertz (Hz) to the highest at 1633 Hz. In practice, most telephones do not include the letters A to D which use the 1,633 Hz high tone, so that the highest available tone generally is 1,477 Hz. It is a primary advantage of the method and apparatus in accordance with the invention that use can be made of these varying tones to determine the performance of the customer's telephone link. An example of a dual-tone signal generated by a DTMF telephone is shown in FIG. 3, in the time domain.

The determination made regarding the quality of the link can either be a determination of the link quality in the audio band or it can be a projection of the estimated link quality when supporting broadband or wideband telecommunications signals. As illustrated in box 10 of the flow diagram, the method may include signature analysis in either the frequency domain or time domain (or both) which may be utilised to project broadband characteristics of the link. In such an analysis, a look-up table is formed from empirical data which is obtained using known links for which both audio and wideband or broadband frequencies are monitored such that, when a particular audio frequency signal is received during use, a corresponding broadband or wideband result can be obtained from the look-up table and a determination made regarding the quality of the specific link being tested for the provision of broadband or wideband services.

Alternatively, as illustrated in box 12, the method may include the running of an algorithm which is provided to project the expected behaviour of the link with broadband or wideband signals from the received audio frequency signal. Wideband and broadband signals include ISDN, HDSL, ADSL and VDSL signals. The user is then informed of the result of the test (Box 14) and returned to the operator (Box 16) for further information or advice on services.

The proposed testing equipment uses digital signal processing (DSP) to analyse the waveform received at the exchange after the connected customer has pressed a key, as instructed by the test apparatus. The composite waveform arriving at the exchange will have been modified by the copper pair between the customer and the exchange in a manner that can be correlated with the propagation characteristics of the line. In the frequency domain there will be a reduction in the relative and absolute amplitudes of the two fundamental tones produced by the subscriber unit, whilst in the time domain there will be a finite group delay between the two tone bursts.

One embodiment of the invention uses algorithms predicting the effect of the characteristics on the relative amplitude and group delay, which can be coded into the DSP unit so that the results of a given test can be translated back into line characteristics.

Alternatively, as discussed above, it would be possible to store representative waveforms from a number of known test lines and use these as a database for comparison with the waveforms received from lines under test. This technique is otherwise known as signature analysis and may be more reliable and less costly to implement than the first mentioned algorithmic approach.

Furthermore, if results of testing with a single key press are inconclusive, it should be possible to request the customer to either repeat the first digit or even to press a different digit. The latter will invoke an alternative tone pair which may be analysed so as to bring the test to a satisfactory conclusion.

If results using a single digit are still inconclusive, it should be possible to ask the customer to press a predetermined sequence of digits in order to bring the test to a satisfactory conclusion.

Clearly the test apparatus will need to incorporate a standard DTMF receiver function in order to confirm that the customer has pressed the correct key(s), before starting analysis of the waveform. It is noted that DTMF transmitter output is permitted to vary with line currents above 40mA and is unspecified below 25mA, and it is therefore important that the tests are performed with line currents in this range.

At the exchange, the operator who is running the tests with the customer may be sited at a normal operator console or at a test-desk. In the latter case, it is possible that adjustments may be made to the customer's telephone line current that can then be specially set to a particular current in order to obtain the best performance from the customer's DTMF telephone.

An implementation of the Analyser box 34 is to take the outputs from the receiver 32 and process them into a form whereby meaningful data concerning the characteristics of the subscriber's line may be made. This processing can take the received DTMF tones and their relative amplitudes and delays.

This processing may produce either frequency or time domain data series, and can be either linear or non-linear.

An example of the linear case is the use of a fast fourier transform (FFT), using DSP, to convert signals received in the time domain into the frequency domain, for assessment of the absolute frequency amplitudes and their relative amplitudes.

A particular example of the non-linear case is to half-wave rectify the received time domain signals which has a special ability to extract lower frequencies from the received signals, as can be seen from the dual tone signal illustrated in FIG. 3. Because the frequency is lower than the two DTMF tones, its amplitude is less affected by the customer's copper pair and can therefore be used as a reference level for the analysis of the DTMF tones. This non-linear processing also produces higher frequency components which will be quite sensitive to the customer's cable characteristics. This may therefore be used for generating the required signature of the line.

Although the method described above provides an effective mechanism for line assessment, the method can be improved further through the transmission of an accurately set (and hence predetermined) signal. Specifically, it is contemplated in an alternative embodiment of the present invention to have the subscriber actuate a pulse transmission of known frequency and/or known phase and known power. In other words, a better assessment of the telecommunication link for broadband applications can be achieved by reducing uncertainty in the test signal.

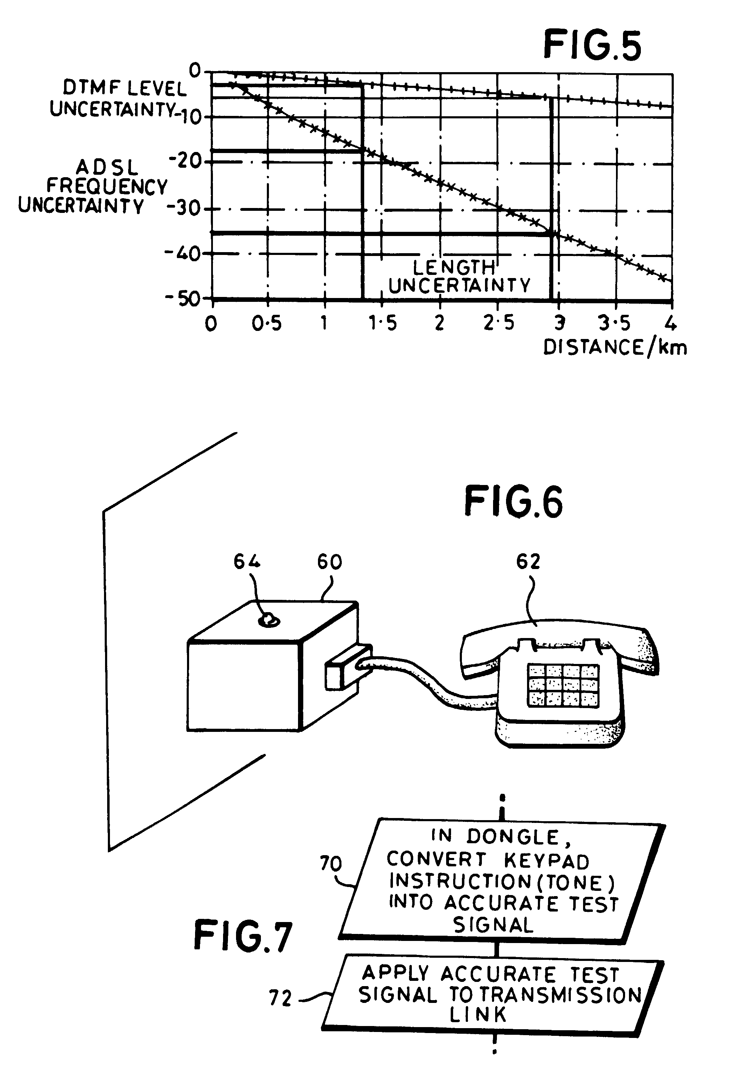

Referring to FIG. 5, a graph of attenuation over length as a function of frequency is shown. As can be seen, an effective propagation distance for a signal varies according to its frequency (principally as a consequence of the skin effect). In other words, the rate of attenuation in a link between the voice band and a high frequency band differs to an extent that can cause a false level of confidence with respect to an effective propagation distance. Although some relationship between transmission characteristics in the voice band and at high frequencies may exist, an ability of a telecommunication link to carry recoverable broadband signals, for example, above the voice band is not readily discernible from a test signal in the voice band. Indeed, although a small variation in any sent test signal level in the voice band has relatively little effect on the effective propagation distance in the voice band, use of the test signal for assessment of the propagation distance for xDSL transmissions may yield widely varying results. In fact, an apparently acceptable assessment in the voice band may lead to a conclusion that suggests a line can support xDSL over several kilometres when, in fact, the line is incompatible with xDSL transmission beyond a few hundred metres.

To obviate this potential misreading of a test signal, a preferred embodiment of the present invention contemplates the use of a fixed level device, typically realised within an automatic or manually activated dongle 60, as shown in FIG. 6. The dongle 60, which may also operate at one of a given number of fixed frequencies, is placed in-line with a telephone handset (or data terminal) 62, such that the dongle 60 both interfaces with the telephone handset 62 and couples directly to the copper pair (not shown). Assessment of the telecommunication link is therefore subject to some delay by the provision of a suitably configured dongle 60 to the test household or commercial residence, with the dongle potentially returnable to the operator after completion of the line assessment.

The concept of using a dongle to tighten transmission characteristics of the test signal is further illustrated in the additional process steps shown in the flow diagram of FIG. 7. Specifically, the additional process steps supplement the original flow in FIG. 1 and locate between steps 6 and 8. More specifically, while step 6 of FIG. 1 may also relate to the requirement to depress a manual activation button on the dongle, an automatic system causes the dongle 60 to respond 70 to an incident (typically a tone) instruction from a keypad on the subscriber handset (i.e. the phone) by converting that tone into a corresponding but more accurately controlled test signal that can then be applied 72 to the transmission link under test.

The dongle 60 can be either line-powered or battery powered, and preferably has a specified signal level with a variation of approximately ±0.2dB of an arbitrarily selected value. Similarly, the dongle preferably has a specified frequency output within a tolerance.

Once in-line, the subscriber dials the system operator to access a test centre, typically realised in the terminal equipment. The subscriber then causes a test signal generated in the dongle 60 to be transmitted to the line card of the terminal equipment. Specifically, the subscriber is instructed by the test centre to depress a key on the telephone keypad, which key depression is intercepted and suppressed by the dongle 60. Then, the dongle 60 responds to the test centre by sending the predetermined test signal; this being an automatic operation. Alternatively, a subscriber can manually actuate the dongle upon instruction.

For non-DTMF terminals, i.e. loop disconnect phones, the subscriber (in response to the test centre instruction) manually actuates a switch 64 on the in-line dongle 60 to cause the test signal to be transmitted to the test centre.

An analog-to-digital converter in a line card at the terminal equipment is configured to make a quantitative assessment of the received test signal over the dedicated link from, for example, the telephone handset 62. In other words, the AID converter in the customer's line card at the exchange can be used to take the requisite measurement without the operator having to provide additional equipment. The quantitative assessment is then compared with an acceptable threshold value stored in a look-up table, and the result logged by the operator. Therefore, provided that the received test signal is quantitatively assessed to be sufficient, the dedicated line to the subscriber is patched to an appropriate modem that allows xDSL transmissions (or the like) over the dedicated copper pair. In the event that the quantitative assessment fails, then the operator either notifies the subscriber, proposes more definitive measurements or ear-marks the line for replacement.

By employing the in-line dongle concept of this alternative embodiment the uncertainty associated with the strict use of DTMF is eliminated and a more accurate assessment of line capability made.

It will, of course, be appreciated that the above description has been given by way of example only and that modification in detail may be made within the scope of the present invention. For example, while the alternative embodiment of the present invention contemplates the use of an externally located in-line dongle, it will be appreciated that the dongle could be realised within the handset by virtue of the DTMF requirement being tightened to a very narrow specification.

Furthermore, in relation to the use of a dongle, the present invention contemplates the provision of a dongle having output frequencies in the xDSL frequency spectrum. The test station 18 can then specifically search for and analyse these high frequency transmissions (at, for example 1MHz) to better assess the suitability of the communication resource for xDSL-type transmissions.

## Claims

1. A method of testing a telecommunications link (26) between an exchange (30) and a subscriber unit (20), comprising the steps of:
causing (6) the subscriber unit to emit (70, 72) a predetermined test signal which is transmitted along the telecommunications link (26) to the exchange (30);
analysing (10-12) the test signal received at the exchange (30); and
characterised in that the method comprises the step of:
assessing an operational quality of the telecommunications link (26) at relatively high broadband frequencies based on the signal received (8) at the exchange when using as the predetermined test signal one of:
i) a DTMF test signal transmitted within a relatively low audio frequency range; and
ii) an accurately generated signal generated from a dongle (60) placed in-line between the subscriber unit (20) and the telecommunications link (26).

2. The method of claim 1, wherein the accurately generated signal generated from the dongle (60) is within a relatively high frequency band substantially corresponding to operating frequencies employed by xDSL modems.

3. The method as claimed in claim 1 or 2, wherein the predetermined test signal has at least a specified signal level with a variation of ±0.2dB and preferably a specified frequency.

4. The method as claimed in claim 1, 2 or 3, wherein the subscriber unit is a Dual Tone Multi-Frequency (DTMF) telephone having a keypad including a plurality of keys.

5. The method as claimed in claim 4, wherein the predetermined test signal is produced by depressing two or more keys.

6. The method as claimed in claim 2, wherein the dongle (60) generates the signal in response to a DTMF tone from the subscriber unit (20).

7. The method as claimed in any preceding claim, further comprising the step of determining at least one of a degree of attenuation and a group delay of the predetermined test signal due to the telecommunications link.

8. The method as claimed in any preceding claim, further comprising the step of using signature analysis to project broadband characteristics of the telecommunications link

9. The method as claimed in claim 7 or 8, wherein a look-up table is formed from empirical data in which known telecommunications links are tested at audio and broadband frequencies such that when a particular audio frequency signal is received during testing of a specific telecommunications link a corresponding broadband result can be obtained and a determination made regarding the suitability of the specific telecommunications link being tested to support broadband services.

10. The method as claimed in claim 7, further comprising the step of projecting expected behaviour of the telecommunications link in relation to relatively high frequency broadband signals from the DTMF test signal received at the exchange.

11. The method as claimed in any preceding claim, wherein the broadband frequencies support at least one of ISDN, HDSL, ADSL and VDSL.

12. The method as claimed in any preceding claim, wherein the telecommunications link (26) comprises at least one of:
a twisted pair substantially realised in copper;
one or more lengths of twisted aluminium pairs within a twisted copper pair;
twisted pairs of differing diameters; and

13. A wireline test system comprising:
a subscriber terminal (20) having means (22-24) arranged to initiate the generation of a test signal having predetermined characteristics; and
a test centre (18) remotely coupled to the subscriber terminal (20) through a wireline communication resource (26) that modifies the predetermined characteristics of the test signal, the test centre (18) having determination means (32-36) coupled to receive the test signal and characterised by:
means (34) arranged to assess an operational quality of the wireline communication resource (26) at relatively high broadband frequencies based on the characteristics of the test signal received at the test centre (18) and wherein the test signal is one of:
i) a DTMF test signal transmitted within a relatively low audio frequency range; and
ii) an accurately generated signal generated from a dongle (60) placed in-line between the subscriber terminal (20) and the wireline communication resource (26).

14. The wireline test system of claim 13, wherein the predetermined characteristic includes a power level that has a power fluctuation within a range of ±0.2dB.

15. The wireline test system of claim 13 or 14, wherein the in-line dongle (60) generates test signals at frequencies relatively close to and preferably within a frequency band of a proposed broadband service.

16. The wireline test system of any one of claims 13 to 15, wherein the test centre is located within terminal equipment and preferably within a line card.
